# EUROPEAN PATENT APPLICATION

(11) **EP 4 119 855 A1**
(43) Date of publication of application: **18.01.2023**
(21) Application number: 22183466.6
(22) Date of filing: 07.07.2022
(51) Int. Cl.: F24F 1/028, F24F 1/037, F24F 6/02, A01M 31/00

(54) **INDOOR VENTILATION CONTROL DEVICE**

(30) Priority: 14.07.2021 SE 2150943
(71) Applicant: Jape Ventgolv AB, 281 49 Hässleholm (SE)
(72) Inventor: af Klinteberg, Pierre, 281 34 Hässleholm (SE)
(74) Representative: Ström & Gulliksson AB

(57) **Abstract**

An indoor air flow control device (1) having a first end (2) comprising an air inlet and a second end (3) comprising an air outlet, said air flow control device (1) further comprising; a power source portion (4); a liquid supply portion (5) including liquid material and means for heating said liquid material, adapted to be connected to said power source portion (4), wherein said power source portion (4) is adapted to activate said means for heating the liquid material to heat the liquid material to a temperature sufficient to vaporize the liquid material thereby forming an aerosol, and wherein said first end (2) is adapted to deliver air to an air pathway upstream of the power source, such that said aerosol is able to exit through said second end (3), wherein said indoor air flow control device (1) is connectable to a bellows (6) arranged at the first air inlet end, wherein said bellows is adapted to be activate to push air from said bellows trough said air inlet and via an air pathway to said liquid supply portion (5) such that said aerosol formed in said liquid supply portion (5) is pushed out through said second end (3) and air outlet.

## Description

### Technical field

The present disclosure relates to an indoor ventilation control device for detection of air streams in indoor ventilation systems, in particular for mechanically ventilated floors and walls. The present invention further relates to a method for detecting air streams in indoor ventilation systems, and the use of the indoor ventilation control device for such control.

### Background

Mechanically ventilated floors, and walls, may be installed in a building to remove moisture and other pollutions, such as radon, from a concrete surface or to create a more pleasant ambient atmosphere in an indoor space. These mechanically ventilated floors, and walls, are usually designed such that a distance sheet is placed on the concrete surface, and the regular floor (such as for instance a chipboard or parquet floor) is placed on top of the distance sheet. Air ducts are arranged on the supply and exhaust air side and the air is lead into the floor by a supply air arrangement.

When the mechanically ventilated floor has been installed, the air flow needs to be controlled in order to make sure that there are no unwanted leakages and that the air flow is moving in the direction it is supposed to. This air flow control is also performed in other types of ventilated indoor spaces. The leakage tests and air flow studies are conventionally performed by using some type of smoke or flowing powder. One way of creating a smoke is by using a glass ampoule filled with titanium tetrachloride, which reacts with the air to form an opaque cloud of titanium dioxide. This smoke has approximately the same density and temperature as the surrounding air and that means that it allows detection of the air flow as it only follows the air flow movements and neither sinks or rises. However, this is a substance which may cause severe skin burns and eye damage, and thus typically requires that the operator uses proper protective gear when performing the air flow check. Generally, it is also highly corrosive and must be kept separate from any tools or other materials that are prone to corrosion. Other methods used include smoke generating and burnable cartridges or sticks, but some of these contain a large amount of chlorides and can thus not be used in sensitive environments.

### Summary

It is in view of the above considerations and others that the embodiments described in this disclosure have been made. This disclosure recognizes the fact that there is a need for and improve indoor ventilation control device. It is an object of the present disclosure, to provide an improved indoor ventilation control device, system and method.

The object is wholly achieved by the inventive indoor ventilation control device, system and method.

The invention is defined by the appended independent claims. Embodiments are set forth in the appended dependent claims and in the following description.

According to a first aspect there is provided an indoor air flow control device having a first end comprising an air inlet and a second end comprising an air outlet, said air flow control device further comprising; a power source portion; a liquid supply portion including liquid material and means for heating said liquid material, adapted to be connected to said power source portion, wherein said power source portion is adapted to activate said means for heating the liquid material to heat the liquid material to a temperature sufficient to vaporize the liquid material thereby forming an aerosol, and wherein said first end is adapted to deliver air to an air pathway upstream of the power source portion, such that said aerosol is able to exit through said second end, wherein said indoor air flow control device is connectable to a bellows arranged at the first air inlet end, wherein said bellows is adapted to be activate to push air from said bellows trough said air inlet and via an air pathway to said liquid supply portion such that said aerosol formed in said liquid supply portion (5) is pushed out through said second end (3) and air outlet.

This device allows for an aerosol to be generated for indoors ventilation control of air flows and leakages, which is both easy to use and not harmful for the operator using the device.

According to the first aspect the liquid material wherein said liquid material comprises any one of propane-1,2-diol and glycerol or a mixture thereof. The liquid material may also comprise other substances. This mixture forms a substantially harmless and preferably odorless aerosol, substantially comprising glycol, which is very advantageous for the indoor ventilation control, compared to known substances for indoor ventilation control.

The bellows may comprise a non-return valve at an end distant from said first end of the device.

The non-return valve closes when the bellows is squeezed, i.e. is in an activated position. This allows for air to enter into the bellows when it is in a resting position, and to be pushed into the pushed into the airflow control device, when the bellows is in an activated (or squeezed) position.

The indoor air flow control device according to the first aspect may further comprise a light source adapted to be detachably attachable on an outer portion of said liquid supply portion, which light source, when in use, is placed such that light is emitted in the direction of the second end of said indoor air flow control device.

This means that the light source may be attached to the device and when used light up the aerosol or smoke coming from the second end, i.e. air outlet. This may be advantageous in indoor spaces where the additional light may be needed. In an alternative the light source emits light in a wavelength range of 380 to 800 nm, i.e. substantially in the visible light range. The hue or color of the emitted light may thus be depending on the application in the visible spectrum, and it may also be a mixture of wavelengths, i.e. "white light". In other alternatives other wavelengths may be used, such as in the ultraviolet or infrared range of light.

According to a second aspect there is provided a system for indoor ventilation control, comprising indoor air flow control a device according to the first, wherein said indoor air flow control device may comprise a power source portion having a first end comprising an air inlet and a second end connected to a first end of a liquid supply portion, wherein said liquid supply further comprises a second end comprising an air outlet; and a bellows attached to said first end.

According to one alternative the system may further comprise a light source attached to an outer surface of said liquid supply portion which light source, when in use, is placed such that light is emitted in the direction of the second end of said device.

According to a third aspect there is provided a method for indoor ventilation control wherein the method comprises:
providing an indoor ventilation control device comprising a power source portion having a first end comprising an air inlet and a second end connected to a first end of a liquid supply portion comprising a liquid material and means for heating said liquid material, wherein said liquid supply portion further comprises a second end comprising an air outlet; providing a bellows attachable to said first end; activating said power source portion such that it activates said means for heating the liquid material in such that the liquid material is heated to a temperature sufficient to vaporize the liquid material thereby forming an aerosol; and activating said bellows such that air is pushed from said bellows trough said air inlet and via an air pathway to said liquid supply portion such that said aerosol formed in said liquid supply portion is pushed out through said second end and air outlet.

This method allows for indoor control of air flow by pushing the aerosol out of the liquid supply, trough the activation of the bellows, i.e. squeezing the bellows such that the air inside is pushed into the power source and further upstream to the liquid supply which has been heated to form the aerosol. The aerosol is thus pushed out of the liquid supply and into the surrounding environment. The aerosol forms a colored smoke and follows the air stream and comprises non-harmful smoke or fume. The device is further easy to handle, the activation of the power source may be automatic, i.e. when air is streamed through the device it is activated (or alternatively performed by e.g. a push of a button), and it is further space saving, due to its small size.

According to the third aspect the method may further comprise attaching a light source to an outer surface of said liquid supply portion which light source, when in use, is placed such that light is emitted in the direction of the second end of said device.

According to a fourth aspect there is provided the use of the system as claimed according to the third aspect for indoor ventilation control.

### Brief description of drawings

Embodiments of the present solution will now be described, by way of example, with reference to the accompanying schematic drawings.
Figs 1a to 1b shows different parts of the device according to the invention.
Figs 2a and 2b shows a system according to the invention.
Figs 3a and 3b shows one embodiment of the system according to the invention.
Fig 4 shows a cress-sectional view of the system in Figs 3a and 3b.

### Description of Embodiments

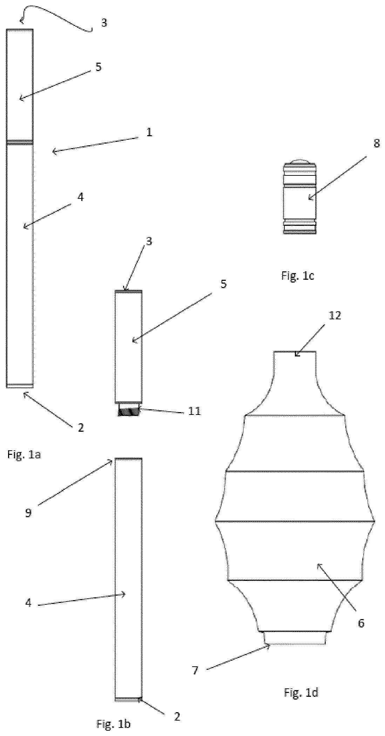

Fig 1a illustrates an indoor ventilation control device 1 comprising a power source portion 4, or battery portion, and a liquid supply portion 5, or liquid supply 5. The device 1 comprises a first end 2, which may also be an air inlet, and a second end 2, which may also be an air outlet. In Fig 1b the device is shown where the power source portion 4 is not mounted or attached to the liquid supply portion 5. The device may be provided in separate parts or portions, which may be attached to each other before use of the device 1.

As illustrated in Fig 1b the liquid supply portion 5 comprises the second end 2 or the air outlet, and a first end 11, which is adapted to be connected to a second end 9 of the power source portion 4. The connection 14 between the power source portion and liquid supply may be any conventional type of connection, including a screw connection or snap connection.

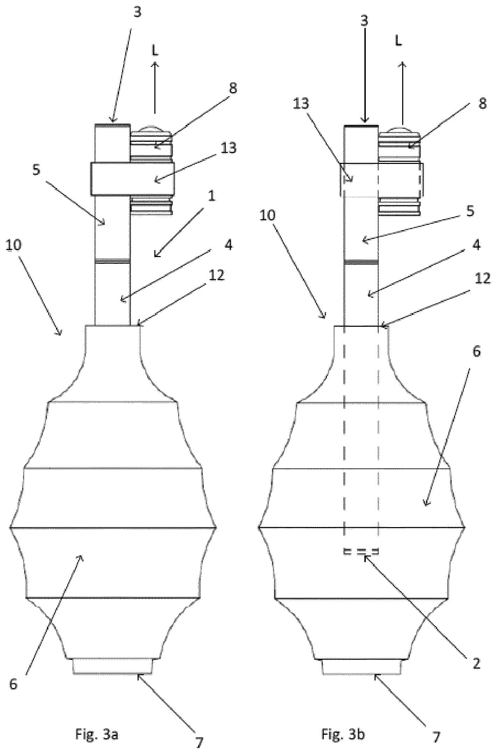

Fig 1c illustrates a light source 8. The light source 8 may be any conventional type of light source, and may emit a light in the visible or non-visible wavelength spectrum, as shown in Figs 3a and 3b the light source 8 may be attached, more preferably removable, or detachably attached, to the outside of the liquid supply portion 5. The means for attachment 13 (as illustrated in Figs 3a and 3b) may be any conventional type of attachment device, such as a rubber string or band, or a snap on type of attachment. It may in other alternatives also comprise Velcro type or adhesive type of attachment. Illustrated in Fig 1d is a bellows 6. The bellows 6 has a first end 7 comprising a non-return valve and a second end 12. The second end 12 comprises a through hole adapted to accommodate or fit onto the first end of the device 1. Not shown in the figures is the function or activation of the bellows. The first end 7 allows for air to pass into the bellows, when it is in a resting state (the resting state is shown in the figures). When the bellows is squeezed or pressed at the center portion, which is located approximately between the first 7 and second end 12, air is pushed out of the second end 12, and the non-return valve is closed. By pushing or squeezing the bellows 6 it is activated. The operator may adjust the amount of aerosol that is pushed put through the second end 3 by adjusting the pressure or force applied to the bellows.

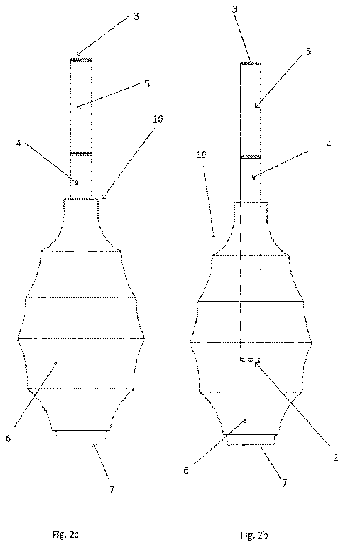

The attachment of the bellows to the device 1, thus forming a system 10, is further illustrated in Figs 2a and 2b. The bellows 6 may be arranged at any suitable distance along the length of the power source portion 4. The bellows may be made from any material flexible enough to be compressed. In one alternative the bellows if made from a rubber material. In one embodiment the bellows is made from a silicone rubber.

The power source portion 5 may comprise a 280 mAh battery. The battery may be chargeable or exchangeable battery. In one embodiment, the power source is rechargeable through an USD-connection.

The liquid supply portion 5, liquid supply, vaporizing portion, or aerosol forming portion, comprises a liquid material contained therein and means (not shown) for heating the liquid material. The means for heating the liquid material may be activated when the power source portion 4 or battery is connected to the liquid supply portion. The means for heating the liquid material may be a heating wire arranged in the liquid portion 4 and in connection with the liquid material such that it heats the material to form an aerosol. The means for heating the liquid material may thus be connected to the power source 5 and adapted to be activated by the power source in any conventional manner. This liquid material forms, when heated an aerosol or smokelike material. The liquid material may comprise any one of the following substances propene-1,2-diol (propylene glycol, CAS-nr: 57-55-6) and glycerol (CAS-nr.: 56-81-5) or a mixture of thereof. In one embodiment 100 % the liquid material may comprise 100 wt-% propylene glycol, and in an alternative embodiment up to 50 wt-% glycerol and up to 50 wt-% propylene glycol. In one embodiment the liquid material comprises propene-1,2-diol in a range from 60-80 wt-% and glycerol in a range from 25-40 wt-%. The aerosol formed, when heating the liquid material, may thus comprise glycol, which is a harmless and virtually odorless substance. The aerosol may further form an opaque smoke. The liquid material may further comprise other substances, which preferably form a harmless and odorless smoke when heated. The mixture may comprise these substances in any amount necessary to create the smoke or aerosol. The liquid material may also comprise coloring agents for providing a colored smoke. The smoke preferably has the same or approximately the same density as the surrounding air, which allows for it to follow the air streams in the indoor space, without sinking to the floor or rising to the ceiling. The liquid supply portion may be configured such that the smoke or aerosol exits the liquid supply through the second end 3. The second end comprises an aerosol outlet, and may comprise one or more openings for allowing the aerosol to exit into the surrounding space, i.e. a "smoke puff". The liquid supply portion is detachable and thereby exchangeable from the power source portion 4. When the device is not used the power source and the liquid supply are preferably detached from each other. The liquid material contained in the liquid supply may be adapted according to the requirements of the air flow control of the indoor ventilated space. Approximately or less than 1 g om liquid material is contained in the liquid supply. The liquid supply may be adapted to provide at least 1000 smoke puffs.

An indoor ventilation control system 10 is illustrated in Figs 2a and 2b comprising the indoor ventilation control device 1, and the bellows 6. An alternative embodiment is disclosed in Figs 3a and 3b, where a light source 8 is attached to the liquid supply 5.

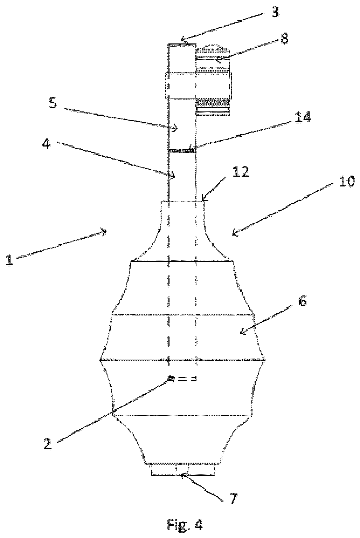

A method for indoor ventilation control may be performed with the system 10, and is operated as follows: the liquid supply 5 and the power source 4 may be provided separately and connected to each other before use, or alternatively be provided as a pre-assembled unit. The power source 4 is activated, by an operator, in order to heat the liquid material in the liquid supply portion 5. The bellows 6 may be attached to the first end 2 before or after activation of the power source 4. In a resting state (as shown in the figures) the bellows is filled with air. When the operator is in the indoor space where the airflow or leakage control is to be performed the operator activates the bellows by squeezing it substantially at a center portion of the bellows. The center portion is the part of the bellows which, in a side view, has a larger diameter and thus is thicker than the ends 7, 12. When the bellows is activated a non-return valve located at the first end 7 closes and air is forced or pushed into the first end 2 located in the power source 4. The air is pushed or forced along an air pathway along the length if the power source to the upstream liquid supply 5, which airflow in turn activates the power source 4, and the aerosol formed by heating the liquid material is pushed or forced out of the second end 3, i.e. through the aerosol outlet. The non-return valve at the end 7, the air inlet at the first end 2 and the aerosol outlet at the second end 3 are further illustrated in Fig 4. In the surrounding or ambient atmosphere, the aerosol forms an opaque cloud, or smoke, which allows for the operator to follow the air streams or air flows in the indoor ventilated space. In one embodiment the system 10 is automatically turned on when used by an operator and turned off when it is not used.

As illustrated in Figs 3a and 3b the system 10 may further be provided with a light source 8, which has been described above. In operating the system 10 in the indoor ventilation control method an operator may turn on the light source prior to, or after activating the power source. The light source is preferably arranged such that it emits a light beam substantially in the direction of the aerosol outlet, and thus may illuminate the aerosol to enhance the visibility of the opaque cloud, or smoke. The light emitted may be in the visible range, and may be a so called white light, or it may be of any color, or in a range which is only visible with for instance UV glasses or IR glasses. Using a light source may be in particular advantageous for the indoor applications and use of the system 10, when the ambient light may be poor.

The system 10 may preferably be used when performing air flow control and leakage control during and after installations of ventilated floors and walls. The system 10 may also be used when performing air flow control and leakage control in other indoor ventilation applications, such as for instance checking air flow of fans or ventilation channels or ducts.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims (or embodiments), these may possibly advantageously be combined, and the inclusion of different claims (or embodiments) does not imply that a combination of features is not feasible and/or advantageous. In addition, singular references do not exclude a plurality. Finally, reference signs in the claims are provided merely as a clarifying example and should not be construed as limiting the scope of the claims in any way.

## Claims

1. An indoor air flow control device (1) having a first end (2) comprising an air inlet and a second end (3) comprising an air outlet, said air flow control device (1) further comprising;
a power source portion (4);
a liquid supply portion (5) including liquid material and means for heating said liquid material, adapted to be connected to said power source portion (4), wherein said power source portion (4) is adapted to activate said means for heating the liquid material to heat the liquid material to a temperature sufficient to vaporize the liquid material thereby forming an aerosol, and wherein said first end (2) is adapted to deliver air to an air pathway upstream of the power source portion (4), such that said aerosol is able to exit through said second end (3),
**characterized in that**
said indoor air flow control device (1) is connectable to a bellows (6) arranged at the first air inlet end, wherein said bellows is adapted to be activate to push air from said bellows trough said air inlet and via an air pathway to said liquid supply portion (5) such that said aerosol formed in said liquid supply portion (5) is pushed out through said second end (3) and air outlet.

2. The indoor air flow control device (1) as claimed in claim 1, wherein said liquid material comprises any one of propane-1,2-diol and glycerol, or a mixture thereof.

3. The indoor air flow control device (1) as claimed in any one of claims 1-2, wherein said bellows (6) comprises a non-return valve at an end (7) distant from said first end (2) of the device (1).

4. The indoor air flow control device (1) as claimed in any of the preceding claims, wherein the indoor air flow control device (1) further comprises a light source (8) adapted to be detachably attachable on an outer portion of said liquid supply portion (5), which light source (8), when in use, is placed such that light is emitted in the direction of the second end (3) of said indoor air flow control device (1).

5. A system (10) for indoor ventilation control, comprising indoor air flow control a device (1) as claimed in any of claims 1 to 4, wherein said indoor air flow control device (1) comprises a power source portion (4) having a first end (2) comprising an air inlet and a second end (9) connected to a first end (11) of a liquid supply portion (5), wherein said liquid supply (5) further comprises a second end (3) comprising an air outlet; and a bellows (6) attached to said first end (2).

6. The system (10) as claimed in claim 5, wherein the system further comprises a light source (8) attached to an outer surface of said liquid supply portion (5) which light source (8), when in use, is placed such that light is emitted in the direction of the second end (3) of said device (1).

7. A method for indoor ventilation control wherein the method comprises:
providing an indoor ventilation control device (1) comprising a power source portion (4) having a first end (2) comprising an air inlet and a second end (9) connected to a first end (10) of a liquid supply portion (5) comprising a liquid material and means for heating said liquid material, wherein said liquid supply portion (5) further comprises a second end (3) comprising an air outlet;
providing a bellows (6) attachable to said first end (2);
activating said power source portion (4) such that it activates said means for heating the liquid material in such that the liquid material is heated to a temperature sufficient to vaporize the liquid material thereby forming an aerosol; and
activating said bellows (6) such that air is pushed from said bellows trough said air inlet and via an air pathway to said liquid supply portion (5) such that said aerosol formed in said liquid supply portion (5) is pushed out through said second end (3) and air outlet.

8. The method as claimed in claim 7, further comprising attaching a light source to an outer surface of said liquid supply portion (5) which light source (8), when in use, is placed such that light is emitted in the direction of the second end (3) of said device (1).

9. Use of the system as claimed in claims 5 or 6 for indoor ventilation control.
